Europäisches Patentamt

European Patent Office

Office européen des brevets

(19)

(11) **EP 0 498 704 B1**

(12) **FASCICULE DE BREVET EUROPEEN**

(45) Date de publication et mention
de la délivrance du brevet:
**11.09.1996 Bulletin 1996/37**

(51) Int Cl.$^6$: **H04L 27/22**

(21) Numéro de dépôt: **92400265.2**

(22) Date de dépôt: **31.01.1992**

(54) **Procédé de démodulation cohérente pour modulation à déplacement de phase et dispositif de mise en oeuvre de ce procédé**

Verfahren zur kohärenten PSK-Demodulation und Einrichtung zu dessen Ausführung

Method for the coherent demodulation of PSK and apparatus for the implementation of the method

(84) Etats contractants désignés:
**CH DE ES FR GB IT LI NL SE**

(30) Priorité: **31.01.1991 FR 9101079**

(43) Date de publication de la demande:
**12.08.1992 Bulletin 1992/33**

(73) Titulaires:
• **ALCATEL TELSPACE**
**F-92734 Nanterre Cédex (FR)**
Etats contractants désignés:
**CH DE ES FR GB IT LI NL SE**
• **ALCATEL N.V.**
**NL-1077 XX Amsterdam (NL)**
Etats contractants désignés:
**CH LI**

(72) Inventeurs:
• **Sadot, Philippe**
**F-75011 Paris (FR)**
• **Thebault, Bertrand**
**F-92600 Asnieres (FR)**
• **Darmon, Marc**
**F-75007 Paris (FR)**
• **Eudes, Jacques**
**F-78600 Mesnil le Roi (FR)**

(74) Mandataire: **Weinmiller, Jürgen**
**Lennéstrasse 9**
**Postfach 24**
**82336 Feldafing (DE)**

(56) Documents cités:
**EP-A- 0 258 649        EP-A- 0 353 779**
**EP-A- 0 373 405        WO-A-85/04999**
**WO-A-89/02200**

## Description

L'invention concerne un procédé de démodulation cohérente pour modulation à déplacement de phase et un dispositif de mise en oeuvre de ce procédé.

L'invention s'applique donc aux systèmes de transmission utilisant une modulation par exemple de type MDP2 ou MDP4.

Dans un démodulateur courant de l'art connu le signal analogique de fréquence intermédiaire $f_i$ est transposé en bande de base à l'aide d'une multiplication sur les voies en phase et en quadrature, puis filtré pour éliminer les fréquences doubles. On numérise alors le signal sur chaque voie, et, après passage dans un filtre adapté, on obtient le signal en bande de base, qui peut être représenté par un nombre complexe :

$$r_k = r(kT_s) = g\exp(j(k\Delta w_i T_s + \phi_k))s_k + n_k$$

avec :

- $g$ gain (perte) apporté par le canal;
- $T_s$ temps symbole;
- $s_k = \exp(j\frac{2\pi}{M}l)$ : $s_k$ étant le symbole émis à

l'instant $kT_s$; M représentant le nombre d'états de phase et l étant un entier correspondant au bit ou aux bits codés;

- $n_k$ la représentation du bruit blanc gaussien à l'instant $kT_s$;
- $\Delta w_i$ - $2\pi\Delta f_i$ correspondant à une différence de pulsation entre les oscillateurs émission et réception.

Si $\delta w = \Delta w_i T_s$ on a :

$$r_k = g\exp(j(k\delta w + \phi_k))s_k + n_k$$

En prenant $h_k = g\exp(j(k\delta w + \phi_k))$ on obtient la notation condensée :

$$r_k = h_k s_k + n_k$$

Dans une démodulation basée sur l'estimation du canal, la contrainte essentielle au bon fonctionnement est l'insertion de R symboles de référence (connus du récepteur à priori) tous les I symboles d'information, pour former des blocs de R+I symboles. Les R symboles de référence peuvent être identiques pour chaque bloc, ou bien être construits par exemple à partir d'une (en MDP2) ou de deux (en MDP4) séquences pseudo-aléatoires de période $N = 2^m-1$ telle que m >> R. L'ordre de grandeur de R peut être voisin de la dizaine, et celui de I de quelques dizaines.

Si le canal est lentement variable on peut supposer : $\phi_k = \phi$ et $\delta w \simeq 0$, ainsi en fixant l'origine des temps à chaque début de bloc on pose :

$$h_k = h_{R/2} = h \text{ pour } k \in \{0,...,R-1\}$$

Grâce à la connaissance que l'on a du signal reçu sur l'intervalle [0,...,R-1] et de par la nature gaussienne du bruit additif $n_k$, on peut estimer la variable h suivant le maximum de vraisemblance. Ce qui revient à minimiser une fonction L définie comme suit :

$$L(\hat{h}) = \sum_{k=0}^{R-1} |r_k - \hat{h}s_k|^2$$

On peut alors calculer le gradient de L par rapport à $h_r$ et $h_i$, en prenant la notation $h = h_r + jh_i$ :

$$G_{hr}(L) = \sum_{k=0}^{R-1} -2\text{Re}(r_k s_k^*) + 2h_r|s_k|^2$$

$$G_{hi}(L) = \sum_{k=0}^{R-1} -2\text{Im}(r_k s_k^*) + 2h_i|s_k|^2$$

En annulant $G_{hr}(L) + jG_{hi}(L)$ on obtient :

$$\hat{h} = \frac{1}{R} \sum_{k=0}^{R-1} r_k s_k^*$$

Pour effectuer la démodulation cohérente, on effectue alors :

$$s_k = \text{sign}(r_k \frac{\hat{h}^*}{|\hat{h}|})$$

La démodulation doit conserver la puissance du signal reçu; ainsi on justifie la normalisation par $|\hat{h}|$.

L'avantage de cette méthode de démodulation est la suppression de l'ambiguité de phase, ainsi que sa bonne tenue au bruit gaussien. On peut noter aussi qu'une fois la synchronisation symbole acquise, la convergence de l'estimateur de phase est inférieure à la durée d'un bloc soit $(R+I)T_s$, itérations. La faible fréquence d'estimation de phase rend la méthode inapplicable lorsque :

$$\Delta wi > \frac{\pi}{15\,(R+I)\,T_s}$$

Ce qui correspond à une contrainte importante sur la dérive des oscillateurs.

Dans une démodulation par boucle, on utilise l'algorithme du gradient pour minimiser une fonction de coût comme décrit dans l'article intitulé "Simultaneous adaptive estimation and decision algorithm for carrier modulation data transmission systems "de H. Kobayashi (IEEE Transactions on communication technology; vol COM-19, Juin 1971 pages 268-280). Cette fonction de coût est élaborée afin d'obtenir un critère de décision selon le maximum de vraisemblance.

$$\psi_k = \text{arg}(h_k) = k\delta w + \phi_k \bmod 2\pi$$

En dérivant cette fonction de coût on obtient une estimée de l'erreur de phase :

$$e_k = \text{Im}(\text{sign}(z_k)\, z_k^*)$$

avec :

$$z_k = r_k \exp(-j\,\hat{\psi}_k)$$

et

$$\hat{\psi}_{k+1} = \psi_K + \hat{\delta}\, w_K - \beta e_k \bmod 2\pi$$

$$\delta w_k = \hat{\delta}_{k-1} - \alpha e_k \bmod 2\pi$$

$\beta$ est le pas du gradient, et correspond à un gain de boucle. $\alpha$ est aussi un paramètre de boucle. On peut le choisir tel que : $\alpha = \beta^2/2$.

Cette boucle peut être désignée : "filtre du second ordre".

Ce système basé sur les décisions ne résoud pas le problème de l'ambiguité de phase. Sa convergence est relativement lente lorsque le bruit est important.

On connaît par ailleurs, par la demande de brevet EP-A2-0.353.779 au nom de NEC un système de détection de préambules mettant en oeuvre une compensation de phase en présence de symboles de référence par corrélation complexe des symboles reçus avec les symboles attendus.

Ce système propose de réaliser une première étape d'estimation, dite de premier ordre, de la déviation de la phase du signal introduite par le canal de transmission, cette estimation de premier ordre étant effectuée périodiquement par corrélation entre d'une part une séquence de symboles de référence insérée périodiquement dans ladite séquence de symboles de données, dite la séquence reçue, et d'autre part une séquence, dite séquence attendue, de symboles de référence ;ainsi qu'une étape de compensation de phase, dite de premier ordre, à partir de ladite estimation de premier ordre.

Dans ce document, la compensation en phase ne s'effectue qu'à partir du calcul de la corrélation avec les symboles de référence et la poursuite en phase n'est pas effectuée en présence des symboles de données. En conséquence, l'estimation de phase et de fréquence n'est pas permanente et il n'est pas possible de suivre efficacement des variations rapides pouvant intervenir entre deux séquences de symboles de référence.

La présente invention a pour objectif de pallier ces inconvénients.

Elle propose à cet effet un procédé de démodulation cohérente conforme aux revendications 1 et 7, ainsi qu'un dispositif mettant en oeuvre ce procédé conforme à la revendication 5.

L'invention permet de lever l'ambiguité de phase, et aussi de réaliser une poursuite en fréquence efficace en supposant la synchronisation sur les symboles réalisée indépendamment.

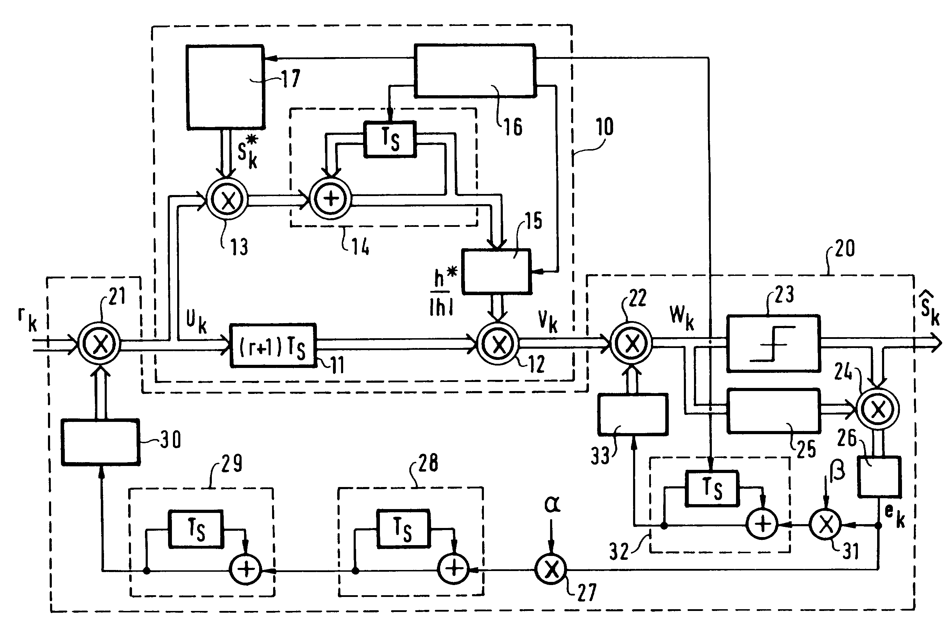

Les caractéristiques et avantages de l'invention ressortiront d'ailleurs de la description qui va suivre, à titre d'exemple non limitatif, en référence à la figure annexée qui illustre le dispositif de l'invention.

Dans le procédé de démodulation de l'invention l'envoi d'une séquence de symbole de référence, à chaque début de bloc, permet une estimation de phase par estimation du canal. Une boucle d'asservissement de phase dite "decision-directed" prend ensuite le relai le reste du temps, en ce qui concerne l'estimation de phase. Un système de contrôle approprié permet l'utilisation successive de deux estimateurs. La poursuite en fréquence, quant à elle, est assurée en permanence par la boucle.

Pour l'explication du procédé on s'affranchit du bruit, ainsi les estimations peuvent être considérées comme parfaites.

$$r_k = \exp\,(j(k\delta w + \phi_k))s_k.$$

On utilise l'estimée de $\delta w$ pour éliminer la fréquence résiduelle, signal que l'on désigne alors par $u_k$.

$$u_k = \exp(j\phi_k)s_k.$$

On élimine ensuite la composante $\phi_k$; ce qui est fait de deux manières :

- soit après réception des symboles de référence par l'estimateur de canal, avec une mise à zéro de $\hat{\phi}_k$ dans la boucle d'asservissement de phase,
- soit le reste du temps par cette boucle avec maintien de la correction par l'estimateur de canal.

Le calcul de l'estimation de canal nécessite que : $R = 2r+1$ itérations et correspond à l'estimation au temps $r+1$ (au milieu de la séquence de référence) ; ainsi en retardant $u_k$ de $(r+1)T_s$, on obtient après correction de phase le signal $v_k$ tel que :

$$v_k = u_{k-r-1}\,\frac{\hat{h}^{\star}_{r+1}}{|\hat{h}_{r+1}|} = \exp\,((j\phi_{k-r-1} - \hat{\phi}_{r+1}))s_{k-r-1} = \exp(j\Delta\phi_K)s_{k-r-1}$$

$$v_R = s_{r+1}\ \text{car}\ \Delta\phi_R = 0$$

A l'itération k= R, le signal $v_k$ est parfaitement corrigé en phase. A ce moment il faut forcer à zéro l'estimation de phase de la boucle : $\Delta\hat{\phi}_R = 0$.

Par la suite le signal $v_k$ doit être corrigé en phase par la boucle pour former $w_k$ :

$$w_k = v_k\,\exp(-j\Delta\hat{\phi}_k) = s_{k-r-1}$$

$e_k$ est alors généré à partir de $w_k$ pour constituer $\hat{\delta}_w$ et $\Delta\hat{\phi}$.

Le dispositif de mise en oeuvre de ce procédé, représenté sur la figure, correspond une structure en logique cablée; mais sa transcription pour une structure microprogrammée est immédiate.

Les traits doubles représentent les signaux complexes, alors que les traits simples les signaux réels. Les flèches indiquent l'ordre dans lequel s'effectuent les opérations.

Ce dispositif comprend :

- un circuit 10 d'estimation de phase à partir de symboles de référence;
- une boucle 20 d'asservissement de phase du second ordre dite "decision directed"; Le circuit 10 étant intercalé entre deux éléments de cette boucle 20.

La boucle 20 comprend successivement :

- un premier circuit multiplieur 21 de compensation en fréquence;
- un second circuit multiplieur 22 de compensation en phase;
- un double comparateur 23 qui délivre le signal $\hat{s}_k$;
- un troisième circuit multiplieur 24 qui reçoit sur ses secondes entrées les signaux d'entrée du double comparateur 23 au travers d'un circuit de conjugaison 25;
- un circuit 26 de sélection de la partie imaginaire;
- une première voie de retour comprenant :

  . un quatrième circuit multiplieur 27 par $\alpha$,
  . un premier circuit additionneur-accumulateur 28 comportant un délai $T_s$ ($T_s$ : temps symbole);
  . un second circuit additionneur-accumulateur 29; comportant également un délai $T_s$;
  . un circuit de conversion 30 dont les sorties sont reliées aux deuxièmes entrées du premier circuit multiplieur 21.

- et une seconde voie de retour comprenant :

  . un cinquième circuit multiplieur 31 par $\beta$ :
  . un troisième circuit additionneur-accumulateur 32;
  . un circuit de conversion 33 dont les sorties sont reliées aux deuxièmes entrées du second circuit multiplieur 22.

Le premier circuit 10, qui est intercalé entre le premier et le second circuit multiplieur (21, 22) comprend successivement entre ces deux circuits multiplieurs :

- un circuit retardateur 11 de $(r+1)\,T_s$;
- un premier circuit multiplieur (12) qui reçoit, sur ses secondes entrées, le signal de sortie du premier circuit multiplieur 21 de la boucle 20 passé dans un second circuit multiplieur 13, dans un circuit additionneur accumulateur 14 et dans un circuit de conversion 15.

Ce premier circuit 10 comprend également :

- un circuit 16 de synchronisation de séquence de références qui est relié respectivement :

  . au troisième circuit additionneur-accumulateur 32 de la boucle 20;
  . au circuit de conversion 15;
  . au circuit additionneur-accumulateur 14 du circuit 10;
  . et à un circuit 17 de codage de séquences dont les sorties sont reliées aux secondes entrées du second circuit multiplieur 13 du circuit 10.

Ce circuit de synchronisation 16 génère, en effet, plusieurs signaux :

- un signal de mise à zéro destiné à l'additionneur-accumulateur 14, à l'instant 1 (début de la séquence de référence);
- un signal de validation, durant R symboles de 1 à R, permettant la génération des symboles de référence $s_k^*$ en sortie du circuit 17;
- un signal de commande de conversion pour le circuit 15,
- ainsi qu'un signal de mise à zéro destiné à l'additionneur-accumulateur 32, à la fin de la séquence de référence.

Dans le fonctionnement du dispositif de l'invention, le signal $u_k$, correspondant au signal $r_k$ dont on a supprimé la fréquence résiduelle grâce au premier circuit multiplieur 11, est multiplié dans le circuit multiplieur 13 au symbole de référence conjugué $s_k^*$, généré par le circuit 17. On effectue alors la somme de ces multiplications successives dans l'additionneur-accumulateur 14. Celui-ci est remis à zéro par le circuit 16 à chaque début de bloc. A la fin de la séquence on obtient en sortie du circuit 14 la valeur $\hat{R}_h$ dont on effectue la conversion à l'aide du circuit 15, qui peut être une mémoire ROM associée à un élément mémoire fixant la sortie :

$$\frac{\hat{h}^*}{|\hat{h}|},$$

pendant la durée d'un bloc.

$u_k$ est retardé de $r+1$ symboles dans le circuit 11, puis on apporte la correction de phase en multipliant en 12 $u_{k-r-1}$ par $\frac{h^*}{|h|}$ pour former $v_k$.

Dans la boucle 20 en multipliant $v_k$ par $\exp(-j\hat{\Delta\phi})$ en 22 on obtient $w_k$. On estime $s_k$ en calculant le signe de $w_k$ (23), ce qui correspond à un double comparateur (voies réelle et imaginaire). $w_k^*$ réalisé après conjugaison de $w_k$(25) est multiplié (24) au signal $\hat{s}_k$ issu du circuit 23. On prend alors la partie imaginaire du résultat de la multiplication (26) pour former $e_k$.

$e_k$ est alors multiplié par $\beta$, puis on effectue la somme des éléments successifs issus de ce produit (31) par le circuit additionneur-accumulateur 32. Ce circuit est périodiquement remis à zéro par le circuit 16 à la fin de la réception de chaque séquence de référence. La sortie de ce circuit fournit $\hat{\Delta\phi}$ qui subit alors une conversion polaire cartésienne dans le circuit 33, celui-ci pouvant être réalisé à l'aide d'une mémoire ROM. La sortie de ce circuit 33, qui s'écrit : $\exp(-j\hat{\Delta\phi})$, est directement appliquée au circuit multiplieur 22.

D'autre part, le produit de $e_k$ par $\alpha$ (27) est présenté à l'entrée du circuit additionneur-accumulateur 28. Ce circuit effectue la somme des produits successifs pour former $\hat{\delta w}$.

L'estimée de $\delta w$ est sommée elle aussi successivement dans le circuit additionneur-accumulateur 29 pour former $(k\hat{\delta w})$ mod $2\pi$. Cet angle est alors converti en $\exp(-jk\hat{\delta w})$ par le circuit 30, qui est identique au circuit 33. La sortie de ce circuit est alors appliquée au circuit multiplieur 21.

Si $\delta wR < \pi$, il est possible d'effectuer une estimation de canal avant la compensation en fréquence de la boucle 20, ce qui ne change pas le principe de synchronisation des deux structures. On remarque que cette variation permet, en additionnant le signal issu du circuit 28 avec le signal issu du circuit 31, de supprimer les circuits 29, 30 et 21 représentés sur la figure.

Les performances de ce dispositif de démodulation sont remarquables, en effet :

- La tenue au bruit gaussien est sensiblement la même que pour l'estimation de canal seule.
- L'ambiguité de phase est levée, ce qui autorise la suppression d'un codage par transition, dont l'inconvénient principal est l'augmentation du taux d'erreur.
- Le comportement face à une composante résiduelle de fréquence est identique à celui de la boucle "decision-directed", avec un filtre du second ordre de mêmes paramètres. On peut obtenir un bon fonctionnement avec $\delta w/2\pi < 0.1$ et un fonctionnement correct $0.1 \leq \delta w/2\pi < 0.2$ avec un risque de faux accrochage lorsque $[E_b/N_o]d_B < 20$. ($E_b/N_O$ : Rapport signal/Bruit)
- Dans le cas où la composante résiduelle en fréquence est petite, la convergence est identique à celle de l'estimation de canal, c'est-à-dire inférieure à la taille d'un bloc, une fois la synchronisation référence acquise. Dans le cas contraire, la convergence est toutefois accélérée vis à vis de la boucle "decision-directed", toute chose étant égale par ailleurs, et de façon plus prononcée lorsque le bruit est important.

Il est bien entendu que la présente invention n'a été décrite et représentée qu'à titre d'exemple préférentiel et que l'on pourra remplacer ses éléments constitutifs par des éléments équivalents sans, pour autant, sortir du cadre de l'invention.

## Revendications

1. Procédé de compensation de variations de phase pour démodulation cohérente d'un signal modulé en déplacement de phase, ledit signal comprenant une séquence de symboles de données, ledit procédé comprenant :

   - une première étape d'estimation, dite de premier ordre, de la déviation de la phase du signal introduite par le canal de transmission, ladite estimation de premier ordre étant effectuée périodiquement par corrélation entre d'une part une séquence de symboles de référence insérée périodiquement dans ladite séquence de symboles de données, dite la séquence reçue, et d'autre part une séquence, dite séquence attendue, de symboles de référence ;
   - une étape de compensation de phase, dite de premier ordre, à partir de ladite estimation de premier ordre ;

   ledit procédé étant caractérisé en ce qu'il comprend en outre :

   - une deuxième étape d'estimation, dite de deuxième ordre, de la déviation de phase du signal, ladite estimation de deuxième ordre étant calculée à la réception de chaque symbole dans ladite séquence de symboles de données ;
   - une étape d'asservissement de phase, dite de second ordre, qui consiste à compenser, pour chaque symbole reçu, les déviations de phase estimées lors de ladite estimation de deuxième ordre.

2. Procédé selon la revendication 1, caractérisé en ce que ladite estimation de premier ordre consiste à réaliser une multiplication complexe du signal par le conjugué de l'intercorrélation, normalisé à l'unité.

3. Procédé selon l'une quelconque des revendications 1 et 2, caractérisé en ce que, lors de ladite compensation de phase de premier ordre, la phase de ladite deuxième estimation est positionnée à zéro.

4. Procédé selon l'une quelconque des revendications 1 à 3, caractérisé en ce que, lors de ladite étape d'asservissement de phase de deuxième ordre, on procède à une compensation en phase et en fréquence de chaque symbole reçu.

5. Dispositif de compensation des variations de phase et de fréquence d'un signal modulé en déplacement de phase, ledit signal comprenant une séquence de symboles de référence insérée périodiquement dans une séquence de symboles de données, ledit dipositif comprenant :

   - un premier circuit (10) d'estimation de phase de premier ordre comprenant des moyens d'estimation de la déviation de la phase du signal introduite par le canal de transmission, ladite estimation de phase de premier ordre étant effectuée périodiquement par corrélation entre ladite séquence de symboles de référence et des symboles attendus identiques aux symboles de ladite séquence de symboles de référence, ledit dispositif étant caractérisé en ce qu'il comprend

- une boucle (20) d'asservissement de phase du second ordre assurant la compensation de déviation de phase et de fréquence et comprenant un premier circuit multiplieur complexe (21) assurant la compensation de fréquence et un second circuit multiplieur complexe (22) assurant la compensation de phase, ledit premier circuit (10) d'estimation de phase de premier ordre étant interposé entre ledit premier circuit multiplieur complexe (21) et ledit second circuit multiplieur complexe (22).

6. Dispositif selon la revendication 5, caractérisé en ce que ledit premier circuit (10) d'estimation de phase de premier ordre comprend successivement :

- un circuit retardateur (11) relié à la sortie dudit premier circuit multiplieur complexe (21) ;
- un troisième circuit multiplieur complexe (12) dont l'une des entrées est reliée à la sortie dudit circuit retardateur (11) ;
- un quatrième circuit multiplieur complexe (13) dont l'une des entrées est reliée à ladite sortie dudit premier circuit multiplieur complexe (21) ;
- un circuit additionneur-accumulateur (14) relié à la sortie dudit quatrième circuit multiplieur complexe (13) ;
- un circuit de conversion (15) relié à la sortie dudit circuit additionneur-accumulateur (14) et à l'autre des entrées dudit troisième circuit multiplieur complexe (12) ;
- un circuit de codage de séquences (17) ;
- un circuit de synchronisation (16) dudit signal modulé en déplacement de phase, ledit circuit de synchronisation (16) étant connecté :

  - audit circuit de conversion (15),
  - audit circuit additionneur-accumulateur (14), et
  - audit circuit de codage de séquences (17),

les sorties dudit circuit de codage de séquences (17) étant reliées à l'autre entrée dudit deuxième circuit multiplieur (13),

ledit signal modulé en déplacement de phase étant appliqué audit troisième circuit multiplieur complexe (12) par l'intermédiaire dudit quatrième circuit multiplieur complexe (13), dudit circuit additionneur-accumulateur (14) et dudit circuit de conversion (15),
ledit troisième circuit multiplieur complexe (12) recevant de plus ledit signal modulé en déplacement de phase retardé par ledit circuit retardateur (11).

7. Procédé de démodulation cohérente pour modulation à déplacement de phase, ce procédé comprenant une étape d'estimation de la phase à partir d'une séquence de symboles de référence insérée périodiquement dans la séquence des symboles de données, ladite estimation de phase permettant une compensation du déphasage introduit par le canal de transmission et consistant à :

- effectuer, à la fin de chaque séquence de symboles attendus, une estimation de canal en calculant la corrélation du signal attendu avec le signal reçu ;
- compenser à cet instant le déphasage apporté par ledit canal de transmission, par multiplication complexe du signal par le conjugué de l'intercorrélation normalisé à l'unité ;

ledit procédé étant caractérisé en ce qu'il comprend en outre une étape d'asservissement de phase du second degré en utilisant les symboles de données et de référence, dont la phase est convenablement ajustée en fonction de la correction déjà apportée à l'étape précédente ledit procédé consistant à positionner à zéro la valeur de la phase estimée de l'étape d'asservissement du second degré au moment où l'on effectue une nouvelle compensation de phase lors de la première étape, à procéder, à chaque symbole reçu, à une compensation en phase et en fréquence, grâce à ladite étape d'asservissement de phase, et à décider le symbole émis le plus probable à partir de ces compensations successives.

**Patentansprüche**

1.  Verfahren zur Kompensation von Phasenänderungen für die kohärente Demodulation eines mittels PSK modulierten Signals, wobei das Signal eine Folge von Datensymbolen enthält und das Verfahren aufweist:

    -   einen ersten Verfahrensschritt der Abschätzung erster Ordnung der Phasenabweichung des Signals aufgrund des Übertragungskanals, wobei die Abschätzung erster Ordnung periodisch durch Korrelation zwischen einerseits einer Folge von periodisch in die Datensymbolfolge, Empfangsfolge genannt, eingefügten Bezugssymbolen und andererseits einer erwarteten Folge von Bezugssymbolen durchgeführt wird,
    -   einen Verfahrensschritt der Phasenkompensation erster Ordnung ausgehend von der Abschätzung erster Ordnung,

    dadurch gekennzeichnet, daß es weiter aufweist:

    -   einen zweiten Verfahrensschritt der Abschätzung zweiter Ordnung der Phasenabweichung des Signals, wobei diese Abschätzung bei Empfang jedes Symbols in der Folge von Datensymbolen berechnet wird,
    -   einen Verfahrensschritt der Phasennachregelung zweiter Ordnung, der darin besteht, für jedes empfangene Symbol die bei der Abschätzung zweiter Ordnung geschätzten Phasenabweichungen zu kompensieren.

2.  Verfahren nach Anspruch 1, dadurch gekennzeichnet, daß die Abschätzung erster Ordnung darin besteht, eine komplexe Multiplikation zwischen dem Signal und dem auf Einheitswert normalisierten konjugierten Wert der Interkorrelation zu berechnen.

3.  Verfahren nach einem beliebigen der Ansprüche 1 und 2, dadurch gekennzeichnet, daß bei der Phasenkompensation erster Ordnung die Phase der zweiten Abschätzung auf Null gesetzt wird.

4.  Verfahren nach einem beliebigen der Ansprüche 1 bis 3, dadurch gekennzeichnet, daß bei dem Verfahrensschritt der Phasennachregelung zweiter Ordnung eine Kompensation nach Phase und Frequenz jedes empfangenen Signals erfolgt.

5.  Vorrichtung zur Kompensation von Phasen- und Frequenzänderungen eines mittels PSK modulierten Signals, das eine Folge von periodisch in eine Datensymbolfolge eingefügten Bezugssymbolen enthält, wobei die Vorrichtung aufweist:

    -   eine erste Schaltung (10) zur Phasenabschätzung erster Ordnung mit Mitteln zur Abschätzung der Phasenabweichung des Signals aufgrund des Übertragungskanals, wobei die Phasenabschätzung erster Ordnung periodisch durch Korrelation zwischen der Folge von Bezugssymbolen und den Symbolen der Folge von Bezugssymbolen identischen erwarteten Symbolen durchgeführt wird,

    dadurch gekennzeichnet, daß die Vorrichtung eine Phasenregelschleife (20) zweiter Ordnung aufweist, die eine Kompensation der Phasen- und Frequenzabweichung durchführt und eine erste komplexe Multiplizierschaltung (21) zur Frequenzkompensation sowie eine zweite komplexe Multiplizierschaltung (22) zur Phasenkompensation enthält, wobei die erste Schaltung (10) zur Phasenabschätzung erster Ordnung zwischen die erste komplexe Multiplizierschaltung (21) und die zweite komplexe Multiplizierschaltung (22 eingefügt ist.

6.  Vorrichtung nach Anspruch 5, dadurch gekennzeichnet, daß die erste Schaltung (10) zur Phasenabschätzung erster Ordnung hintereinander aufweist:

    -   eine Verzögerungsschaltung (11), die an den Ausgang der ersten komplexen Multiplizierschaltung (21) angeschlossen ist,
    -   eine dritte komplexe Multiplizierschaltung (12), die mit einem ihrer Eingänge an den Ausgang der Verzögerungsschaltung (11) angeschlossen ist,
    -   eine vierte komplexe Multiplizierschaltung (13), die mit einem ihrer Eingänge an den Ausgang der ersten komplexen Multiplizierschaltung (21) angeschlossen ist,
    -   eine Addier-Akkumulierschaltung (14), die an den Ausgang der vierten komplexen Multiplizierschaltung (13) angeschlossen ist,
    -   eine an den Ausgang der Addier-Akkumulierschaltung (14) und an den zweiten Eingang der dritten Multiplizierschaltung (12) angeschlossene Umwandlungsschaltung (15),

- eine Sequenzenkodierschaltung (17),
- eine Schaltung (16) zur Synchronisation des mittels PSK modulierten Signals, wobei diese Schaltung an die Umwandlungsschaltung (15), die Addier-Akkumulierschaltung (14) und die Sequenzenkodierschaltung (17) angeschlossen ist,

wobei die Ausgänge der Sequenzenkodierschaltung (17) an den zweiten Eingang der zweiten Multiplizierschaltung (13) angeschlossen sind,
wobei das PSK-Signal an die dritte komplexe Multiplizierschaltung (12) über die vierte komplexe Multiplizierschaltung (13), über die Addier-Akkumulierschaltung (14) und über die Umwandlungsschaltung (15) angelegt ist,
wobei die dritte komplexe Multiplizierschaltung (12) außerdem das PSK-Signal nach Verzögerung in der Verzögerungsschaltung (11) empfängt.

7. Verfahren zur kohärenten Demodulation für ein PSK-Signal mit einem Verfahrensschritt der Abschätzung der Phase aufgrund einer periodisch in die Folge von Datensymbolen eingefügten Folge von Bezugssymbolen, wobei die Phasenabschätzung eine Kompensation der durch den Übertragungskanal eingeführten Phasenverschiebung erlaubt und darin besteht,

- am Ende jeder Folge von erwarteten Symbolen eine Kanalabschätzung durch Berechnung der Korrelation des erwarteten Signals mit dem empfangenen Signal durchzuführen,
- in diesem Augenblick die durch den Übertragungskanal eingeführte Phasenverschiebung durch komplexe Multiplikation des Signals mit dem konjugierten Wert der auf den Einheitswert normalisierten Interkorrelation zu kompensieren,

dadurch gekennzeichnet, daß es weiter einen Verfahrensschritt der Phasennachregelung zweiten Grades unter Verwendung der Daten- und der Bezugssymbole aufweist, bei dem die Phase abhängig von der bereits im vorhergehenden Verfahrensschritt durchgeführten Korrektur geeignet eingestellt wird, wobei das Verfahren darin besteht, den geschätzten Phasenwert des Verfahrensschritts zur Nachregelung zweiten Grads in dem Augenblick auf Null zu setzen, in dem eine neue Phasenkompensation während des ersten Verfahrensschritts erfolgt, weiter bei jedem empfangenen Symbol eine Phasenund Frequenzkompensation aufgrund des Verfahrensschritts der Phasennachregelung durchzuführen und eine Entscheidung bezüglich des am meisten wahrscheinlichen Symbols ausgehend von diesen aufeinanderfolgenden Kompensationen zu treffen.

## Claims

1. A method of compensating for phase variations for coherent demodulation of a phase-shift keyed signal, said signal comprising a sequence of data symbols, said method comprising:

- a first estimation stage, referred to as being a "first order" stage, for estimating the phase deviation in the signal as introduced by the transmission channel, said first order estimation being effected periodically by correlation between firstly a sequence of reference symbols periodically inserted in said sequence of data symbols, referred to as the "received" sequence, and secondly a sequence of reference symbols referred to as the "expected" sequence;
- a first phase compensation stage referred to as being a "first order" stage for compensating phase on the basis of said first order estimation;

said method being characterized in that it further comprises:

- a second estimation stage, referred to as being a "second order" stage, for estimating the phase deviation of the signal, said second order estimation being calculated during reception of each symbol in said sequence of data symbols;
- a phase-locked loop stage, referred to as being a "second order" stage, which consists in compensating, for each symbol received, the phase deviations estimated in said second order estimation.

2. A method according to claim 1, characterized in that said first order estimation consists in performing a complex multiplication of the signal by the conjugate of the cross correlation, normalized to unity.

3. A method according to claim 1 or 2, characterized in that during said first order phase compensation, the phase of said second estimation is set at zero.

4. A method according to any one of claims 1 to 3, characterized in that in said second order phase-locked loop, compensation in phase and in frequency is effected for each received symbol.

5. A device for compensating for frequency and phase variations of a phase-shift keyed signal, said signal comprising a sequence of reference symbols periodically inserted in a sequence of data symbols, said device comprising:

   - a first order first phase estimation circuit (10), comprising estimation means for estimating the phase deviation of the signal as introduced by the transmission channel, said first order phase estimation being effected periodically by correlation between said sequence of reference symbols and expected symbols identical to the symbols of said sequence of reference symbols, said device being characterized in that it includes:
   - a second order phase-locked loop (20) ensuring compensation for frequency and phase deviation and comprising a first complex multiplier circuit (21) ensuring frequency compensation and a second complex multiplier circuit (22) ensuring phase compensation, said first order first phase estimation circuit (10) being interposed between said first complex multiplier circuit (21) and said second complex multiplier circuit (22).

6. A device according to claim 5, characterized in that said first order first phase estimation circuit (10) comprises in succession:

   - a delay circuit (11) connected to the output of said first complex multiplier circuit (21);
   - a third complex multiplier circuit (12), having one input connected to the output of said delay circuit (11);
   - a forth complex multiplier circuit (13) having one input connected to said output of said first complex multiplier circuit (21);
   - an adder-accumulator circuit (14) connected to the output of said forth complex multiplier circuit (13);
   - a conversion circuit (15) connected to the output of said adder-accumulator circuit (14) and to the other inputs of said third complex multiplier circuit (12);
   - a sequence coding circuit (17); and
   - a synchronization circuit (16) for synchronizing said phase-shift keyed signal, said synchronization circuit (16) being connected to:

     . said conversion circuit (15);
     . said adder-accumulator circuit (14); and
     . said sequence coding circuit (17);

   the outputs of said sequence coding circuit (17) being connected to the other input of said second multiplier circuit (13);

   said phase-shift keyed signal being applied to said third complex multiplier circuit (12) via said forth complex multiplier circuit (13), said adder-accumulator circuit (14) and said conversion circuit (15); and
   said third complex multiplier circuit (12) further receiving said phase-shift keyed signal delayed by said delay circuit (11).

7. A method of coherent demodulation for phase-shift keying, the method comprising a phase estimation stage based on a sequence of reference symbols inserted periodically in the sequence of data symbols, said phase estimation allowing compensation for the phase error introduced by the transmission channel, and consisting in:

   - effecting a channel estimate at the end of each sequence of expected symbols, by calculating the correlation between the expected signal and the received signal;
   - compensating at this instant the phase error introduced by said transmission channel, by complex multiplication of the signal by the conjugate of the cross correlation normalized to unity;

   said method being characterized in that it further comprises a second order phase-locked loop using the data and reference symbols, of which the phase is suitably adjusted in dependence on the correction already applied in the preceding stage, said method consisting in setting to zero the value of the phase estimate of the second order phase-locked loop stage at the moment in which a new phase compensation is effected by the first stage, applying compensation in phase and frequency to each received symbol, by means of said phase-locked loop stage, and deciding on the most likely transmitted symbol on the basis of the successive compensations.